# EUROPÄISCHE PATENTANMELDUNG

(11) **EP 2 623 252 A1**
(43) Veröffentlichungstag der Anmeldung: **07.08.2013**
(21) Anmeldenummer: 12154045.4
(22) Anmeldetag: 06.02.2012
(51) Int. Cl.: B23K 31/02, B23K 33/00, C21D 9/50, F01D 5/06, F16L 1/09

(54) **Verfahren zur stoffschlüssigen Verbindung zweier Bauteile unter Verwendung von Anformungen zum Manipulieren dieser Bauteile**

(71) Anmelder: Siemens Aktiengesellschaft, 80333 München (DE)
(72) Erfinder: Brußk, Stefan, 45479 Mülheim an der Ruhr (DE); Kocdemir, Bora, Dr., 45357 Essen (DE); Schreiber, Tim, 44807 Bochum (DE); Sheng, Shilun, Dr., 46149 Oberhausen (DE); Truckenmüller, Frank, Dr., 44879 Bochum (DE); Uravic, Tino, 45327 Essen (DE)

(57) **Zusammenfassung**

Die Erfindung betrifft ein Verfahren zur stoffschlüssigen Verbindung zweier Bauteile (2), insbesondere zweier rotierender Wellenteile (2), in einem Verbindungsbereich (8), wobei benachbart zum Verbindungsbereich (8) Anformungen (10) zur Manipulation der Oberflächengeometrie der Bauteile (2) positioniert werden, wobei die beiden Bauteile (2) miteinander verschweißt werden und wobei eine Wärmenachbehandlung zur gezielten Einbringung von Druckeigenspannungen, deren Verteilung durch die manipulierte Oberflächengeometrie mitbestimmt wird, durchgeführt wird.

## Beschreibung

Die Erfindung betrifft ein Verfahren zur stoffschlüssigen Verbindung zweier Bauteile, insbesondere zweier rotierender Wellenteile, in einem Verbindungsbereich.

Werden Bauteile durch Schweißen und somit über eine Schweißnaht stoffschlüssig miteinander verbunden, so werden hierdurch die Materialeigenschaften der Bauteile im Bereich der Verbindung verändert. Diese Änderung der Materialeigenschaften ist auf die Wärmeeinwirkung während dem Schweißprozess zurückzuführen, weswegen der davon betroffene Bereich auch als Wärmeinflusszone bezeichnet wird. In der Regel ist die Änderung der Materialeigenschaften nachteilig und daher unerwünscht.

Bei der Herstellung von Schweißverbindungen zwischen den Segmenten einer Turbinenwelle beispielsweise entstehen hohe Zugeigenspannungen im Bereich der Schweißnaht, die bei der Auslegung der Bauteile und der Schweißverbindungen in der Planungsphase berücksichtigt oder durch eine Nachbehandlung der miteinander verschweißten Bauteile reduziert werden. Ein sehr gängiges Verfahren zur Nachbehandlung sieht zum Beispiel vor, Druckeigenspannungen oberflächennah durch Rollieren oder Kugeldruckstrahlen in die miteinander verschweißten Bauteile einzubringen, welche den vorhandenen Zugeigenspannungen entgegenwirken. Derartige Verfahren zur Nachbehandlung der miteinander verschweißten Bauteile sind jedoch recht aufwändig und wirken nur im oberflächennahen Bereich.

Ausgehend hiervon liegt der Erfindung die Aufgabe zugrunde, ein alternatives Verfahren zur stoffschlüssigen Verbindung zweier Bauteile anzugeben.

Diese Aufgabe wird erfindungsgemäß durch ein Verfahren mit den Merkmalen des Anspruchs 1 gelöst.

Das Verfahren dient zur stoffschlüssigen Verbindung zweier Bauteile, insbesondere zweier rotierender Wellenteile, also zum Beispiel zweier Turbinenwellenteile, in einem Verbindungsbereich, wobei benachbart zum Verbindungsbereich Anformungen zur Manipulation der Oberflächengeometrie der Bauteile positioniert werden, wobei die beiden Bauteile miteinander verschweißt werden und wobei eine Wärmenachbehandlung zur gezielten Einbringen von Druckeigenspannungen, deren Verteilung durch die manipulierte Oberflächengeometrie mitbestimmt wird, durchgeführt wird.

Die Anformungen werden dabei bevorzugt ausschließlich eingesetzt, um die Wirkung der Wärmenachbehandlung zu beeinflussen. Das heißt, dass die Anformungen nicht an der stoffschlüssigen Verbindung beteiligt sind, und dass insbesondere zwischen den Anformungen keine Schweißnaht ausgebildet wird. Mit Hilfe der Anformungen wird stattdessen die Verteilung der mittels der Wärmenachbehandlung eingebrachten Druckeigenspannungen manipuliert, wobei die Druckeigenspannungen den vorhandenen Zugeigenspannungen entgegenwirken und somit deren Wirkung zumindest teilweise aufheben. In der Summe ergibt sich infolgedessen eine durch die Wärmenachbehandlung veränderte Verteilung von Zugeigenspannungen und Druckeigenspannungen, welche wesentlich günstiger ist, als die Verteilung vor der Wärmenachbehandlung. Die Kombination von Manipulation der Oberflächengeometrie mit der Wärmenachbehandlung ersetzt dann eine Nachbehandlung der miteinander verschweißten Bauteile, bei der diese einer einfachen Wärmenachbehandlung und/oder einer Oberflächenbehandlung durch Rollieren oder Kugeldruckstrahlen ausgesetzt werden.

Insbesondere bei rotationssymmetrischen Bauteilen, die entlang der Symmetrieachse aneinandergereiht und miteinander verschweißt werden, ist eine Verfahrensvariante von Vorteil, bei der ringförmige Anformungen vorgesehen sind. Dies ist beispielsweise bei Rotorsegmenten einer Turbinenwelle der Fall.

Zweckmäßig ist weiter eine Variante des Verfahrens, bei der die Anformungen vom Verbindungsbereich beabstandet und insbesondere im Randbereich der sogenannten Wärmeeinflusszone (WEZ) positioniert sind. Eine derartige Positionierung hat sich prinzipiell als günstig erwiesen, wobei zweckdienlicherweise für jede stoffschlüssige Verbindung eine an die Bauteile angepasste Form und Positionierung der Anformungen zum Beispiel durch eine Modellrechnung numerisch ermittelt wird.

Vor allem bei Bauteilen mit besonders großen Abmessungen ist eine Verfahrensvariante von Vorteil, bei der die Wärmenachbehandlung lokal im Verbindungsbereich durchgeführt wird, da hierdurch der Aufwand für die Wärmenachbehandlung gegenüber einer Wärmenachbehandlung, die sich über das gesamte Volumen der miteinander verschweißten Bauteile erstreckt, signifikant reduziert ist.

Zudem ist eine Verfahrensvariante vorteilhaft, bei der als Wärmenachbehandlung ein Glühvorgang und insbesondere ein Spannungsarmglühvorgang bzw. eine Anlassbehandlung vorgesehen ist. Dabei lassen sich durch eine derartige Wärmenachbehandlung Zugeigenspannungen in den miteinander verschweißten Bauteilen abbauen, ohne dabei Druckeigenspannungen einzubringen.

Darüber hinaus ist eine Verfahrensvariante von Vorteil, bei der eine Wärmenachbehandlung durchgeführt wird, während derer die miteinander verschweißten Bauteile in einem Teilschritt mit einer Flüssigkeit, insbesondere mit einem Öl oder mit Wasser, besprüht werden. Ziel ist es dabei, oberflächennah in den miteinander verschweißten Bauteilen einen ausgeprägten Temperaturgradienten zu erzwingen, wobei hierdurch im entsprechenden Bereich verstärkt Druckeigenspannungen eingebracht werden. Dabei ist es insbesondere von Vorteil, wenn der Teilschritt, bei dem die Bauteile mit der Flüssigkeit besprüht werden, bei einer Temperatur gleich oder unterhalb der Temperatur für eine Haltephase des Spannungsarmglühvorgangs gestartet wird. Dieser Teilschritt der Wärmenachbehandlung wird dann zweckmäßigerweise am Ende der Haltephase des Spannungsarmglühvorgangs vorgesehen und ist somit in diesem Fall Teil einer geregelten Abkühlphase.

In Abhängigkeit des Verwendungszweckes der miteinander verschweißten Bauteile ist es außerdem von Vorteil, die Anformungen nach der Wärmebehandlung mechanisch zu entfernen. Dies gilt insbesondere, wenn durch die damit verbundene Gewichtsreduzierung ein positiver Effekt erzielt wird oder wenn, wie im Falle von Turbinenwellenteilen, dadurch eine ungünstige Beeinflussung der Funktionsweise, hier der Strömungscharakteristik, vermieden wird.

Bevorzugt wird außerdem eine Verfahrensvariante, bei der eine Wärmenachbehandlung durchgeführt wird, während derer die miteinander verschweißten Bauteile in einem Teilschritt während einer Sprühbehandlung mit Wasser besprüht werden und bei der die Anformungen nach der Wärmebehandlung mechanisch entfernt werden. Die Anformungen werden dabei bevorzugt oder ausschließlich dafür eingesetzt, um die durch die Sprühbehandlung erzeugten Druckeigenspannungen im Bereich der Schweißnaht zu verlagern. Das heißt, dass die Anformungen nicht an der stoffschlüssigen Verbindung beteiligt sind, und dass insbesondere zwischen den Anformungen keine Schweißnaht ausgebildet wird. Mit Hilfe der Anformungen wird die Verteilung der mittels der Sprühbehandlung eingebrachten Druckeigenspannungen vorgegeben, wobei die Druckeigenspannungen den vorhandenen Zugeigenspannungen entgegenwirken und somit deren Wirkung zumindest teilweise aufheben. Durch Entfernen der Anformungen werden die maximalen Druckeigenspannungen im Schweißnahtbereich verlegt. In der Summe ergibt sich infolgedessen eine veränderte Verteilung von Zugeigenspannungen und Druckeigenspannungen, welche wesentlich günstiger ist, als die Verteilung ohne Sprühbehandlung und Entfernen der Anformungen. Dadurch wird eine signifikante Tiefenwirkung der Druckeigenspannungen erzielt. Die Kombination von Manipulation der Oberflächengeometrie und Entfernen der Anformungen mit der Wärmenachbehandlung ersetzt dann eine Nachbehandlung der miteinander verschweißten Bauteile, bei der diese einer einfachen Wärmenachbehandlung und/oder einer Oberflächenbehandlung durch Rollieren oder Kugeldruckstrahlen ausgesetzt werden. Ausführungsbeispiele der Erfindung werden nachfolgend anhand einer schematischen Zeichnung näher erläutert. Darin zeigen:
- FIG 1: in einer Schnittdarstellung ausschnittsweise zwei miteinander verschweißte Rotorsegmente einer Turbinenwelle mit Anformungen und
- FIG 2: in einer Schnittdarstellung ausschnittsweise die Rotorsegmente einer Turbinenwelle nach dem Entfernen der Anformungen.

Einander entsprechende Teile sind in allen Figuren jeweils mit den gleichen Bezugszeichen versehen.

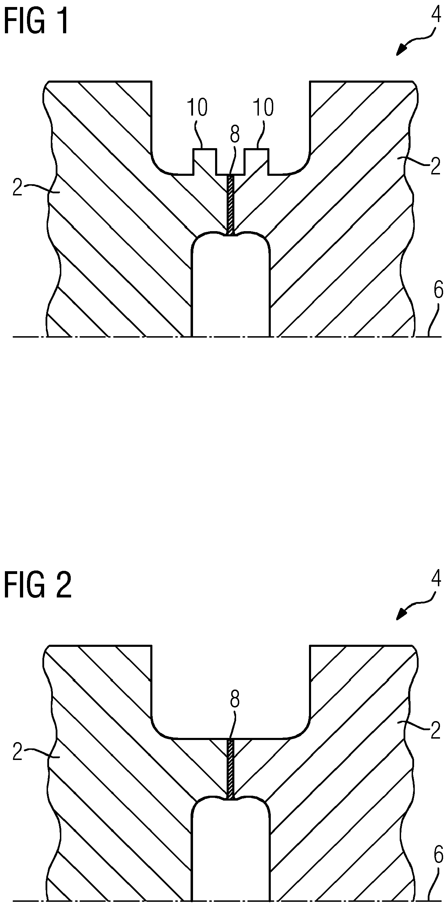

Das hier vorgestellte Verfahren zur stoffschlüssigen Verbindung zweier Bauteile ist beispielsweise vorgesehen, um Rotorsegmente 2 einer Turbinenwelle 4 unlösbar miteinander zu verbinden, wie dies in FIG 1 schematisch und ausschnittsweise zu sehen ist. Jene Rotorsegmente 2 werden im Rahmen des Herstellungsprozesses der Turbinenwelle 4 entlang einer Symmetrieachse 6 aneinandergereiht und über zumindest eine sich vorwiegend quer zu Symmetrieachse 6 erstreckende Schweißnaht 8 miteinander verbunden.

Die Verschweißung der Rotorsegmente 2 erfolgt dabei zum Beispiel durch Engspaltschweißen, wobei unabhängig von der Art des Schweißverfahrens im Zuge des Schweißverfahrens im Verbindungsbereich, also im Bereich der Schweißnaht 8 und der unmittelbaren Umgebung, Zugeigenspannungen eingebracht werden, welche die Belastbarkeit der stoffschlüssigen Verbindung reduziert und sich somit negativ auf die Lebenserwartung der Turbinenwelle 4 auswirkt.

Zur Erhöhung der Widerstandsfähigkeit der stoffschlüssigen Verbindung werden die wirkenden Zugeigenspannungen im Verbindungsbereich, also im Bereich der Schweißnaht 8 und der unmittelbaren Umgebung, nachträglich wieder reduziert. Hierzu wird nach dem Schweißvorgang eine Wärmenachbehandlung durchgeführt, wobei hierdurch gezielt Druckeigenspannungen eingebracht werden, die den Zugeigenspannungen entgegenwirken. Die Wärmenachbehandlung gemäß dem hier vorgestellten Verfahren geht jedoch über die an sich bekannte einfache Wärmenachbehandlung von Schweißverbindungen, wie bei einem einfachen Spannungsarmglühvorgang, hinaus.

Um eine gewünschte Verteilung von Druckeigenspannungen, die im Rahmen der Wärmenachbehandlung in den Verbindungsbereich eingebracht werden, zu erzielen, wird in einem vorgelagerten Verfahrensschritt noch vor dem Verschweißen der Rotorsegmente 2 eine Manipulation der Oberflächengeometrie der Rotorsegmente 2 vorgenommen. Für die Rotorsegmente 2 werden im Verbindungsbereich, also in dem Bereich, in dem später die Schweißverbindung ausgebildet wird, symmetrisch zur Symmetrieachse 6 angeordnete, ringförmige Anformungen 10 vorgesehen, mit deren Hilfe eine als günstig ermittelte Geometrie der Oberfläche vorgegeben wird. Die Bestimmung einer günstigen Oberflächengeometrie erfolgt dabei zweckdienlicherweise mit Hilfe von Modellrechnungen in der Planungsphase für die Rotorsegmente 2 und die Turbinenwelle 4. Bei der Herstellung der Rotorsegmente 2 werden die so ermittelten Anformungen 10 von vornherein mitberücksichtigt. Handelt es sich also beispielsweise bei den Rotorsegmenten 2 um Gussformen, so sind die Anformungen 10 bereits in der Negativform für den Gießvorgang berücksichtigt.

Durch die mittels der Anformungen 10 geänderte Oberflächengeometrie der Rotorsegmente 2 im Verbindungsbereich wird dann im Rahmen der Wärmenachbehandlung eine durch die Oberflächengeometrie mitbestimmte Verteilung von Druckeigenspannungen in die miteinander verschweißten Rotorsegmente 2 eingebracht, wobei gemäß dem Superpositionsprinzip die eingebrachten Druckeigenspannungen die gegebenen Zugeigenspannungen teilweise aufheben, was in der Summe zu einer wesentlich günstigeren Verteilung von Zugeigenspannungen und Druckeigenspannungen in der gesamten Turbinenwelle 4 führt.

Im Rahmen der Wärmenachbehandlung wird dabei bevorzugt der Verbindungsbereich lokal begrenzt auf eine Temperatur zwischen 400°C und 800°C in einer Anwärmphase hochgeheizt. Nach einer sich danach anschließenden Haltephase, z.B. auf der Höhe der sogenannten Spannungsarmglühtemperatur, werden die miteinander verschweißten Rotorsegmente 2 im Rahmen einer geregelten Abkühlphase mit Wasser besprüht, um so oberflächennah einen starken Temperaturgradienten hervorzurufen, wodurch verstärkt Druckeigenspannungen in diesem Bereich aufgebaut werden.

Damit durch die Anformungen 10 die Strömung in der Turbine, für die die Turbinenwelle 4 vorgesehen ist, nicht negativ beeinflusst wird, werden die Anformungen 10 nach der Wärmenachbehandlung mechanisch entfernt, also zum Beispiel abgesägt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Verfahren zur stoffschlüssigen Verbindung zweier Bauteile (2), insbesondere zweier rotierender Wellenteile (2), in einem Verbindungsbereich (8),
wobei benachbart zum Verbindungsbereich (8) Anformungen (10) zur Manipulation der Oberflächengeometrie der Bauteile (2) positioniert werden,
wobei die beiden Bauteile (2) miteinander verschweißt werden und
wobei eine Wärmenachbehandlung zur gezielten Einbringung von Druckeigenspannungen, deren Verteilung durch die manipulierte Oberflächengeometrie mitbestimmt wird, durchgeführt wird.

2. Verfahren nach Anspruch 1,
wobei ringförmige Anformungen (10) vorgesehen sind.

3. Verfahren nach Anspruch 1 oder 2,
wobei die Anformungen (10) vom Verbindungsbereich (8) beabstandet sind.

4. Verfahren nach einem der Ansprüche 1 bis 3,
wobei die Wärmenachbehandlung lokal im Verbindungsbereich (8) durchgeführt wird.

5. Verfahren nach einem der Ansprüche 1 bis 4,
wobei als Wärmenachbehandlung ein Glühvorgang und insbesondere ein Spannungsarmglühvorgang vorgesehen ist.

6. Verfahren nach einem der Ansprüche 1 bis 5,
wobei eine Wärmenachbehandlung durchgeführt wird, bei der die miteinander verschweißten Bauteile (10) in einem Teilschritt mit einer Flüssigkeit, insbesondere Wasser, besprüht werden.

7. Verfahren nach Anspruch 6,
wobei der Teilschritt, bei dem die Bauteile (10) mit der Flüssigkeit besprüht werden, bei einer Temperatur gleich oder unterhalb der Temperatur für eine Haltephase des Spannungsarmglühvorgangs gestartet wird.

8. Verfahren nach einem der Ansprüche 1 bis 7,
wobei die Anformungen (10) nach der Wärmebehandlung mechanisch entfernt werden.
